# EUROPEAN PATENT APPLICATION

(11) **EP 4 557 094 A1**
(43) Date of publication of application: **21.05.2025**
(21) Application number: 23209890.5
(22) Date of filing: 14.11.2023
(51) Int. Cl.: G06F 9/48

(54) **GENERATING SCHEDULES FOR AN ADAPTIVE EMBEDDED SYSTEM**

(71) Applicant: Rockwell Collins, Inc., Cedar Rapids, IA 52498 (US)
(72) Inventor: GARCIA GENER, Alejandro, Cork, T12 FA49 (IE); SKALISTIS, Stefanos, Cork, T23 V3FK (IE); MORA DE SAMBRICIO, Javier, Cork, T12 X2TN (IE)
(74) Representative: Dehns

(57) **Abstract**

A method of generating schedules for an adaptive embedded system, the method comprising: deriving task sets of all possible tasks to be performed by the embedded system; deriving sets of all possible hardware configurations of the embedded system; creating a multi-model system having a multi-model defining the adaptivity of the system for all possible tasks and all possible hardware and all combinations thereof, the adaptivity defining how the system can change operation responsive to a mode change requirement and/or occurrence of a fault; solving a scheduling problem for the models of the multi-model system; and providing schedule instructions to the system, for performance of tasks, based on the solution.

## Description

### TECHNICAL FIELD

The present disclosure is concerned with adaptive embedded systems, particularly adaptive safety-critical real-time embedded systems and methods for generating schedules for such systems.

### BACKGROUND

Embedded systems are electronic hardware and software systems integrated within a larger system to perform dedicated tasks within that system. Such systems have many applications and are used in many environments where several tasks need to be performed for different purposes and at different times/based on or using different parameters. Avionics, for example, use embedded systems for performing the many tasks that need to be executed in an aircraft e.g. navigation, communication, flight control and monitoring. Such systems have to meet strict safety standards and regulations, provide real-time data processing, fault tolerance and fail-safe mechanisms, particularly when performing safety-critical tasks.

Embedded systems are realised using processors. Whilst some systems are realised with single-core processors, that run a single process at a time, there has been a move to multi-core processors - i.e. processors having multiple cores, either homogenous or heterogeneous, on the same die - to provide increase in performance for the same footprint and power consumption. The use of multiple cores simplifies frequency scaling and scheduling and improves heat dissipation compared to single core processors. On the other hand, having multiple cores running tasks in parallel can give rise to scheduling problems, especially where resources are shared between the cores, and present challenges, especially in real-time and safety-critical systems, in scheduling when the embedded systems are configured to change between two or more modes, depending on use conditions/environmental conditions and/or in the case of occurrence of faults in the system such as overheating or one of many other types of fault that can occur. It is important that the systems are provided with scheduling that ensures the multiple applications running on a single core do not interfere with each other and, further, that each core will execute its designated tasks in the proper sequence at all times, and within an acceptable time period. It is also important to be able to manage the tasks in the case of faults in the system.

Embedded systems rely on static configurations (including cores, memory, networks, software parameters, data communication channels, mapping and scheduling) of hardware and of software run on that hardware, in order to meet the task timing requirements. On the other hand, many embedded systems are adaptive embedded systems configured to change their configuration to operate in different modes at selected times or in selected conditions. This improves efficiency and performance, since the same embedded system can be used to operate in several modes, recognising that the different modes will not be needed at the same time, rather than requiring a separate system for each mode of operation. When switching between modes, however, scheduling changes are also required to avoid delays or interference. Furthermore, transient or permanent faults e.g. overheating, short-circuit, etc. may occur in the embedded system itself or on its input sensors and/or output actuators. Again, these faults will impact the scheduling and performance of tasks. Adaptive embedded systems may be configured to adapt their operation in the face of such faults, but such adaptations can still result in delays or interference.

Adaptive embedded systems currently known focus either on mode-change adaptation - i.e. deal with the requirements in changing mode of operation - or on fault-based adaptation - i.e. adapt their operation in response to occurrence of a specific type of fault. These days, however, embedded systems are being designed to operate in more and more modes and are also vulnerable to many different types of fault. None of the current systems is able to adapt the system by collectively addressing all mode configurations and all possible faults. There is, therefore, a need for generating schedules for embedded systems that address these needs.

### SUMMARY

According to this disclosure, there is provided a method of generating schedules for an adaptive embedded system, the method comprising: deriving task sets of all possible tasks to be performed by the embedded system; deriving sets of all possible hardware configurations of the embedded system; creating a multi-model system having a multi-model defining the adaptivity of the system for all possible tasks and all possible hardware and all combinations thereof, the adaptivity defining how the system can change operation responsive to a mode change requirement and/or occurrence of a fault; solving a scheduling problem for the models of the multi-model system; and providing schedule instructions to the system, for performance of tasks, based on the solution.

Also provided is an adaptive embedded system including: one or more processor cores for performing tasks according to a schedule; a task model of all possible tasks to be performed by the one or more processors; a hardware architecture model of all possible hardware configurations for the system; a multi-model system for generating multi-models from the task model and the hardware architecture model, defining the adaptivity of the system for all possible tasks and all possible hardware and all combinations thereof, the adaptivity defining how the system can change operation responsive to a mode change requirement and/or occurrence of a fault; an optimisation engine configured to solve a scheduling problem for the models of the multi-model system; and a mapping and schedule module configured to providing schedule instructions to the system, for performance of tasks, based on the solution.

### BRIEF DESCRIPTION

Examples of the method of this disclosure will now be described with reference to the drawings. It should be noted that these are examples only, and variations are possible within the scope of the claims.
Figure 1 shows a nominal schedule of a first mode of operation for an example embedded system, for the purposes of explanation.
Figure 2 shows a nominal schedule of a second mode of operation for the example embedded system of Figure 1, for the purposes of explanation.
Figure 3 shows a nominal schedule of a fault state for the first mode of operation for the example embedded system of Figure 1, for the purposes of explanation.
Figure 4 shows a nominal schedule of a fault state for the second mode of operation for the example embedded system of Figure 2, for the purposes of explanation.
Figure 5 is a schematic diagram illustrating a solving process for adaptive embedded systems.
Figure 6 is a schematic diagram to explain the method of the disclosure.

### DETAILED DESCRIPTION

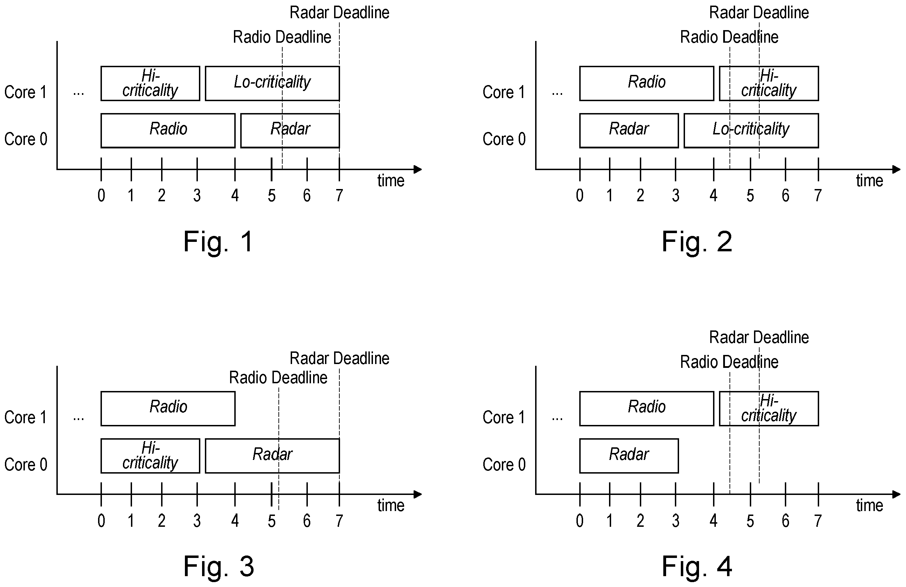

Figures 1 to 4 show timing schedules for an adaptive embedded system in an aircraft, implemented on a processor having two cores, core 0 and core 1. The system provides the functionality of the radio and the radar as well as two other tasks - one of low criticality functionality and one of high criticality functionality.

Figure 1 shows the planned scheduling for these four tasks in a first mode which, in this case, is while the aircraft is cruising. The software for operating the radio and the radar is provided on the first core - core 0. The software for performing the other two tasks is implemented on the second core - core 1. In this example, the deadline for changing the radio operation (`Radio deadline') is at 5.25 time units, and the deadline for changing the radar operation (Radar deadline) is at 7 units of time. In this 'cruise' mode, in the example, the scheduling is designed, within the constraints of the deadlines, to enable the radar to scan for large objects in its immediate flight path, and to alternate with radio operation according to the schedule. Similarly, the high and low criticality tasks will be performed, in parallel with the radio and radar operation, according to their schedule on Core 1.

The same embedded system may be configured to change its operation (i.e. is adaptive) according to e.g. the aircraft mission phase or flight phase. In the example shown, a second mode for the embedded system is the search mode. When the system is switched to this mode, the scheduling of the four tasks adapts e.g. to the example shown in Fig. 2. Here the radio deadline (or time constraint) is unchanged, but the radar deadline is shortened (in this example to 4.5 time units) since, in a search mode, where the radar is searching for survivors below the aircraft e.g. in a search and rescue mission, the radar is looking for smaller objects in all directions and requires different frequencies/periods of operation. To enable the search mode to be reliably informed, the scheduling is, therefore, adapted and now the radar operation is performed alternately with the low criticality task by the first core, core 0, while the radio tasks are performed with the high criticality tasks on the second core, core 1.

Figures 3 and 4 illustrate adaptivity of the system in response to a core overheat fault. If a core overheats, the operating frequency of that core may be reduced, to lessen the load on the core and avoid permanent damage to the core, which means that tasks executed by that core may take longer. In the cruise mode (described above with reference to Fig. 1), and if the first core 0 is overheating, the scheduling is adapted such that the radio and the radar functionalities are separated out between the two cores, and the high criticality function is performed by the same core as the radar, thus reducing the processing load on the first core and ensuring all of the safety critical tasks can be performed within their time constraints. The low criticality task is, in this case, dropped because, with inclusion of this task, with the potential longer execution times of the overheated core, the system deadlines would be violated.

Similarly, Fig. 4 shows overheating fault adaptivity for the search mode (described above with reference to Fig. 2) when the first core, core 0, overheats. Again, the low criticality task is dropped so that the radar task can be performed within its time constraints even if it requires longer execution time.

In known systems, methods are known for generating schedules for mode changing systems and methods are known for generating schedules for adapting to particular types of fault, but there is no technique that address these collectively. This problem is addressed by the method of this disclosure which is designed to generate schedules for adaptive systems as they adapt to different modes and different faults. Rather than modelling each different configuration, the methodology here explicitly models the adaptivity of the system using a Model of Computation that encompasses multiple sub-models (multi-model) and a generic Architecture Model (AM). By explicitly modelling adaptivity, any type and number of required changes can be modelled, as well as their combination/any combination thereof, and existing solvers can be used. The use of MoC and AM integrates existing scheduling techniques but also extends to cover new cases of change.

Some definitions will be given to help understand the description that follows.

System State: - The set of values for the system parameters e.g. number of tasks, their dependencies, their execution requirements, number of Processing Elements (PEs), their configuration, their interconnection, number of available memory locations, their connections to PEs, etc.

Adaptation: - Any change in the system parameters i.e. transitioning from a system state to another system state.

Mapping: - The assignment of tasks to Pes and their dependencies to memory locations.

Scheduling: - The order and timing of execution of tasks.

Multi-Model: - A model with N sub-models, being a vectored version of the task model extended with data-dependency concepts, defined as MMS = (T, P, D, E, T, ↓), where:
T is the set of task-sets (meta-set);
P is the meta-set of periods of the task meta-set;
D is the meta-set of deadlines of the task meta-set;
E is the meta-set of data dependencies. The set of dependencies are divided into two disjoint subsets containing the mandatory and optional dependencies, i.e. E=Eⁱₘ U Eⁱₒ and Eⁱₘ ∩ Eⁱₒ = Ø for all i ∈ [0,N-1];
↑ is the meta-set of production rates of each source task in the meta-set of dependencies;
↓ is the meta-set of consumption rates of each destination task in the meta-set of dependencies;

Generic Architecture Model: - A tuple GA = (C, L, M, N) where:
C is a set of sets of Pes, each set c ∈ C is called a computing cluster, with each computing cluster c containing one or more cores k, i.e. k ∈ c;
L ⊆ C x C is a set of links among computing clusters that form the network;
M is a set of memory banks/locations;
N is the set of network channels of a network interface.

Further, in order for the model to be correct, several consistency conditions have to be met, which have been formal defined. This include (but are not limited to):
1. Tasks should start no earlier than their period.
2. Tasks should finish no later than their period.
3. Tasks should finish no later than their deadline.
4. A task should start after all preceding tasks have finished.
5. A task should start if and only if there is enough data produced by its predecessors.
6. No task should be executed in a processor that already executes another task.
7. All data produced are eventually consumed.
8. All tasks are assigned to a time partition.
9. All time partitions are aligned i.e. there is no time partition that starts or ends in the middle of another time partition.
10. Tasks should be executed in a particular type of PE.
11. No symmetric solutions should be generated.

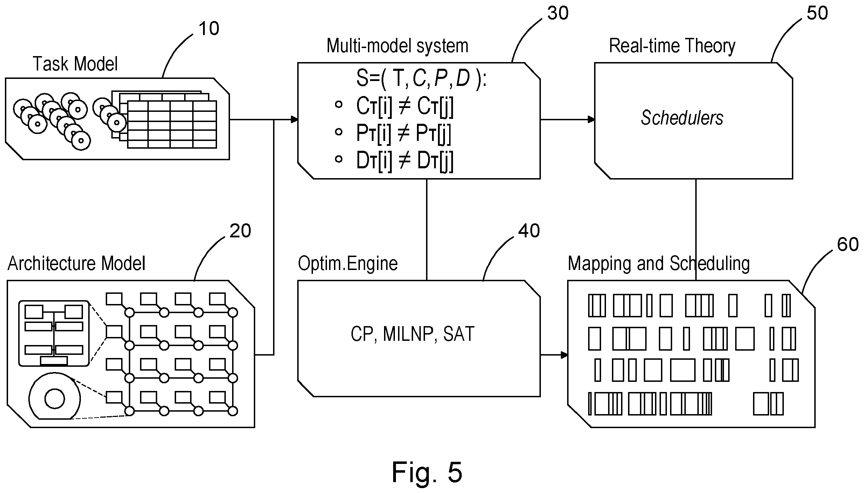

According to the methodology of this disclosure, each version of the multi-model system, defined as MMS = (T, P, D, E, T, ↓), describes one static configuration of the system from a software perspective and its timing requirements, and each version of the generic architecture, GA, describes a static configuration of the hardware. Together, the MMS and the GA describe a unique system state. For this unique state, the real-time mapping and scheduling problem can be solved either using existing theory or by posing it as an optimization problem to an optimisation engine as seen in Fig. 5.

In Fig 5, the various tasks (software) are defined in a task model 10, and the architecture (hardware) that runs the tasks is defined as an architecture model 20. These are provided to the multi-model system module 30 that defines the MMS. The system state from the MMS module is provided to an optimisation engine 40 and/or to schedulers 50 that use existing real-time theory, which provide instructions for mapping and scheduling, 60. Using this modelling methodology, a schedule is generated for each possible state that the system has been designed to operate in.

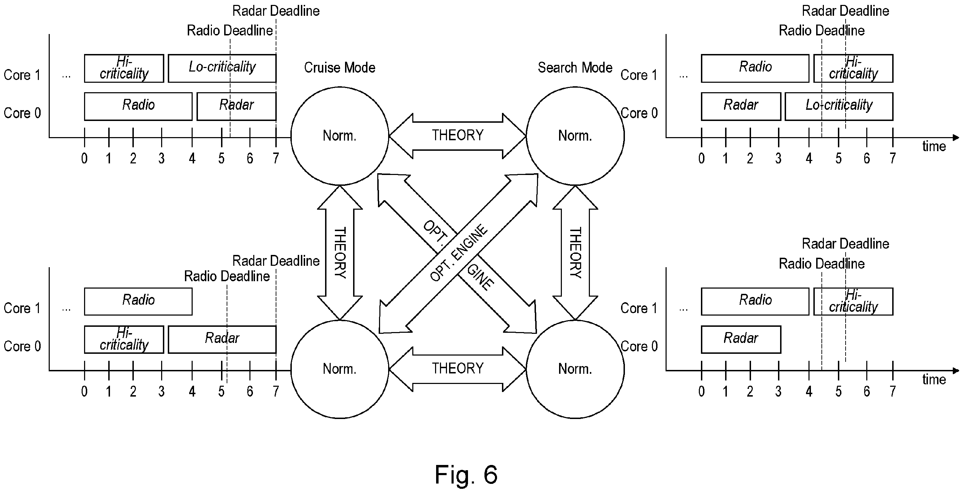

To allow for the adaptivity of the system - i.e. to provide scheduling for the system when it transitions from one system state to another e.g. due to a mode change or in response to a fault, the optimisation engine 40 is used, as shown in Fig. 6. This enables a more adaptive rescheduling of tasks, more quickly, than would be possible using theory 50 when a large amount of computation is required. The optimisation engine is configured to solve the problem using values from a source state and a target state. The optimisation criteria can be time, space, energy, thermal, separation or a linear combination thereof.

Applying the optimisation engine 40 to the examples described above with reference to Figs. 1 to 4, and now with reference to Fig. 6, transitioning from a source state in cruise mode as in Fig. 1 (now in the top left corner of Fig. 6) to a target state of nominal search mode (shown in Fig. 2 and now in the top right corner of Fig. 6), the conventional theoretical calculation can be used from the model in the MMS module 30. Similarly, known theory can be used when transitioning from overheat cruise operation (Fig. 3 and now bottom left of Fig. 6) to overheat search operation (Fig. 4 and now bottom right of Fig. 6). Theoretical schedule generation can also be used for the vertical transitions from normal cruise to overheat cruise modes and from normal search to overheat search modes. In the description, cruise and search modes are just examples of two different operation modes of the system, and overheating is just one example of a fault type. By modelling the adaptivity in the multi-model system, schedules can be generated for all possible mode type transitions and all possible faults.

In addition to the horizontal and vertical transitions described above, using theory, the methodology of this disclosure also allows transitions in a diagonal manner e.g. in this example, between the normal cruise mode and the overheat search mode (e.g. if a transition from cruise mode to search mode is required and the overheat fault is detected) and between the normal search mode and the overheat cruise mode, in a single computation, rather than indirectly via the horizontal and vertical transition computations.

By using a model of the system adaptivity, as described below, multi-processor systems, networks and even systems of systems can be mapped and scheduled quickly and reliably and within defined parameter constrains. Existing theory can be encompassed whilst also enabling new theories to be developed. The methodology enables rigorous analysis for fault-tolerance of adaptive systems and can be integrated with existing toolchains such as AADL.

## Claims

1. A method of generating schedules for an adaptive embedded system, the method comprising:
deriving task sets of all possible tasks to be performed by the embedded system;
deriving sets of all possible hardware configurations of the embedded system;
creating a multi-model system having a multi-model defining the adaptivity of the system for all possible tasks and all possible hardware and all combinations thereof, the adaptivity defining how the system can change operation responsive to a mode change requirement and/or occurrence of a fault;
solving a scheduling problem for the models of the multi-model system; and
providing schedule instructions to the system, for performance of tasks, based on the solution.

2. The method of claim 1, wherein the multi-model defines adaptivity in response to all possible mode changes and all possible fault occurrences for the system.

3. The method of claim 1 or 2, wherein the multi-model is a model with N sub-models, being a vectored version of a task model extended with data-dependency concepts, defined as MMS = (T, P, D, E, ↑, ↓), where:
T is a meta-set of task sets;
P is a meta-set of periods of the task meta-set;
D is a meta-set of deadlines of the task meta-set;
E is a meta-set of data dependencies divided into two disjoint subsets containing mandatory and optional dependencies, i.e. E=Eⁱₘ U Eⁱₒ and Eⁱₘ ∩ Eⁱₒ = Ø for all i ∈ [0,N-1];
↑ is a meta-set of production rates of each source task in the meta-set of dependencies;
↓ is a meta-set of consumption rates of each destination task in the meta-set of dependencies.

4. The method of any preceding claim, wherein the sets of all possible hardware configurations is a set of versions of a generic architecture.

5. The method of any preceding claim, wherein the scheduling problem is solved by an optimisation engine (40).

6. An adaptive embedded system including:
one or more processor cores for performing tasks according to a schedule;
a task model (10) of all possible tasks to be performed by the one or more processors;
a hardware architecture model (20) of all possible hardware configurations for the system;
a multi-model system (30) for generating multi-models from the task model and the hardware architecture model, defining the adaptivity of the system for all possible tasks and all possible hardware and all combinations thereof, the adaptivity defining how the system can change operation responsive to a mode change requirement and/or occurrence of a fault;
an optimisation engine (40) configured to solve a scheduling problem for the models of the multi-model system; and a mapping and schedule module (60) configured to providing schedule instructions to the system, for performance of tasks, based on the solution.

7. The system of claim 7, further comprising real-time theory schedulers (50) configured to provide scheduling information to the mapping and schedule module (60).

8. The system of claim 6 or 7, having one or more processors each having a plurality of processor cores.

9. An aircraft control system including one or more embedded systems as claimed in claim 6, 7 or 8.

10. The system of claim 9, wherein the tasks include radar operation and radio operation.

11. The system of claim 10, where a mode change requirement includes changing operation from a navigation mode to a search mode.

12. The system of claim 10 or 11, wherein the fault includes a core overheat fault.
